# EUROPEAN PATENT SPECIFICATION

(11) **EP 1 830 110 B1**
(45) Date of publication and mention of the grant of the patent: **25.12.2013**
(21) Application number: 05811510.6
(22) Date of filing: 28.11.2005
(51) Int. Cl.: F16H 61/02, F16H 59/18, F16H 59/24, F16H 59/32, F16H 59/44, F16H 59/74

(54) **SPEED CHANGE CONTROLLER OF VEHICLE PERFORMING MOTOR-DRIVEN SUPERCHARGE OF ENGINE**
WECHSELGETRIEBESTEUERUNG FÜR FAHRZEUG, DIE EINE MOTORGETRIEBENE AUFLADUNG DES MOTORS DURCHFÜHRT
MODULE DE COMMANDE DE CHANGEMENT DE VITESSE DE VEHICULE REALISANT UNE SURALIMENTATION DU MOTEUR PAR UN MOTEUR ELECTRIQUE

(30) Priority: 30.11.2004 JP 2004346397
(43) Date of publication of application: 05.09.2007
(73) Proprietor: TOYOTA JIDOSHA KABUSHIKI KAISHA, Toyota-shi, Aichi-ken, 471-8571 (JP)
(72) Inventor: Igarashi, Osamu, Toyota-shi, Aichi 4718571 (JP)
(74) Representative: TBK
(86) International application number: PCT/JP2005/022225
(87) International publication number: WO 2006/059735

(56) References cited:
- JP-A- 04 321 872
- JP-A- 62 191 237
- JP-A- 2004 270 602

## Description

### Field of the Invention

The present invention relates to a transmission control device of a vehicle equipped with an engine supercharged by electric driving and a transmission, and more particularly, to a transmission control device which changes over speed stage shift patterns of the transmission in relation to a supercharger being driven by an electric motor. In this connection, since the supercharge of the engine originally means to recover the energy of engine exhaust gases by a compression of engine intake air by driving an intake air compressor by an exhaust gas turbine, the electrically driven supercharger herein concerned is principally a motor-assist turbocharger in which the intake air compressor is driven by an electric motor in addition to the exhaust gas turbine. However, the present invention does not exclude a supercharger driven only by an electric motor.

### Background of the Invention

It is described in Japanese Patent Laid-open Publication Hei 1-117930 to control, in the vehicle equipped with an engine accompanied by a motor assist turbo-supercharger and a transmission, the motor assist of the supercharger in relation to the speed stage shifting of the transmission, so as to stop the motor assist of the supercharger when the transmission is shifted to a particular speed stage such as the 1st speed stage or the reverse stage. This document, and JP 2004 270602 disclose the features of the preamble of claim 1. In Japanese Patent Laid-open Publication Hei 4-191563, in view of the matter that a difference is generated in the relationship between the engine torque estimated from the throttle opening and the actual engine torque according to the altitude of driving or whether a supercharger is equipped or not, it is proposed to change the speed stage shift pattern according to such a difference. In Japanese Patent Laid-open Publication Hei 4-310436, in view of the matter that the uprise of the engine rotational speed delays more as the degree of supercharging is higher, it is proposed to prepare, in the vehicle equipped with an engine accompanied by a main supercharger and an auxiliary supercharger, a speed stage shift pattern less liable to downshifting with the speed stage shift lines being positioned at a relativity low speed area and a speed stage shift pattern more liable to downshifting with the speed stage shift lines being positioned at a relatively high speed area, and to use the speed stage shift pattern less liable to downshifting when the main supercharger only is operated and to use the speed stage shift pattern more liable to downshifting when both of the main and auxiliary superchargers are operated.

### Disclosure of the Invention

When the supercharger of the engine is driven by an electric motor, which is a motor assist drive to assist the driving by the exhaust gases of the engine by an electric motor, since the input by the electric motor is added to the original output of the engine, the output power actually exhibited by the engine output shaft should be increased from the engine output power estimated from such engine operating parameters as the throttle opening, engine rotational speed, etc. corresponding to the engine output power available with no electric driving of the supercharger.

On the other hand, the changing-over of the speed stages of the transmission of the vehicle is generally made based upon a speed stage shift pattern on a two-dimensional coordinate of vehicle speed vs. throttle opening, in which areas of different speed stages are set out as separated by the speed stage shift lines. In this connection, the vehicle speed corresponds to the engine rotational speed by way of the speed change gear ratio of the transmission, and the throttle opening approximately corresponds to the engine torque. Further, for the convenience of control, the vehicle speed in setting the speed stage shift pattern may be handled as the rotational speed of any member such as the output shaft of the transmission or the axle corresponding to the vehicle speed, and the throttle opening may be handled as the amount of depression of the accelerator pedal or the displacement of an optional member for adjusting the engine output torque such as the fuel injection control valve. In the following descriptions, the demand for the engine output by the driver is unified to the expression of throttle opening.

Incidentally, in order to improve the fuel consumption of the vehicle, it is generally better not to raise the reduction gear ratio, although there occurs some difference according to the driving conditions or driven conditions of the vehicle. The object of the present invention is to further improve the fuel consumption of the vehicle by considering the abovementioned situations with regard to the electric motor driving of the supercharger and the changing-over of the speed stage shift pattern from the viewpoint of improving the fuel consumption of the vehicle.

In order to accomplish the above mentioned object, the present invention proposes a speed stage control device according to claim 1. Further features and advantageous modifications are shown in the dependent claims.

When at least a part of speed stage shift lines according to a coordinate of vehicle speed vs. throttle opening is biased more to an area of larger throttle opening when a supercharge driven by the electric motor is made than when no supercharge driven by the electric motor is made in a speed stage control device for a vehicle equipped with an engine accompanied by a supercharger driven by an electric motor and a transmission as described above, since the engine output power actually exhibited by the engine output shaft increases relative to the engine output power estimated based upon the throttle opening and the vehicle speed when the supercharge driven by the electric motor is made, as the output power of the electric motor is added to the original engine output power, the demand for the driving force is met even when the vehicle is driven at a smaller speed reduction gear ratio by correspondingly suppressing the speed stage shifting to a lower speed stage to respond to an increased demand for the vehicle driving force appearing as an increase of the throttle opening, whereby the fuel consumption of the vehicle is improved to the maximum thereof without affecting the acceleration feeling.

In this case, the biasing of at least a part of the speed stage shift lines to the area of larger throttle opening may be changed according to rotational speed of the supercharger so as to be larger when the rotational speed is high than when the rotational speed is low. By such an arrangement, the speed stage shift pattern can be modified to conform to an increase of the engine output power by monitoring the increase of the input power to the supercharger from the electric motor by an increase of the rotational speed of the supercharger, whereby the fuel consumption of the vehicle is improved to the maximum thereof without affecting the drive torque performance of the vehicle.

Or, the biasing of at least a part of the speed stage shift lines to the area of larger throttle opening may be changed according to supercharge pressure so as to be larger when the supercharge pressure is high than when the supercharge pressure is low. By such an arrangement, the speed stage shift pattern can also be modified to conform to an increase of the engine output power by monitoring the increase of the input power to the supercharger from the electric motor by an increase of the supercharge pressure, whereby the fuel consumption of the vehicle is improved to the maximum thereof without affecting the drive torque performance of the vehicle.

Further, the biasing of at least a part of the speed stage shift lines to the area of larger throttle opening may be changed according to relationship between a parameter expressing engine output and speed change gear ratio of the transmission so as to be larger when the engine output parameter is high relative to the speed change gear ratio than when the engine output parameter is low relative to the speed change gear ratio. The engine output parameter may be selected from a group consisting of engine rotational speed, supercharge pressure, fuel injection rate and air intake rate. By such an arrangement, in the engine accompanied by a motor assist supercharger the speed stage shift pattern can be appropriately modified according to an engine output parameter so that the fuel consumption of the vehicle is improved to the maximum thereof without affecting the drive torque performance of the vehicle by an earlier downshifting, particularly when the uprise of the engine output power is difficult by the engine output parameter being too low relative to the speed change gear ratio in the 4th or 5th speed stage of the transmission, thereby avoiding that the load of the electric motor increases at such a high speed stage as to consume a useless electric power or to cause a trouble in the electric motor of the supercharger.

Further, the biasing of at least a part of the speed stage shift lines to the area of larger throttle opening may be changed according to lapse of time from start of the supercharge driven by the electric motor so as to be larger when the time lapse is large than when the time lapse is small. By such an arrangement, the speed stage shift pattern can be modified to meet with the time delay from the start of the electric motor to the increase of the engine output power, so that the fuel consumption of the vehicle is improved to the maximum thereof without affecting the drive torque performance of the vehicle.

In either of the above, the biasing of at least a part of the speed stage shift lines to the area of larger throttle opening may include zero as the minimum value thereof. By such an arrangement, the control of biasing at least a part of speed stage shift lines on a coordinate of vehicle speed vs. throttle opening more to an area of larger throttle opening when a supercharge driven by the electric motor is made than when no supercharge driven by the electric motor is made in relation to the operation of the electric motor in the engine accompanied by the motor assist supercharger can be made in a wide range by making the condition of zero shifting as a starting end of the control.

Further, the biasing of at least a part of the speed stage shift lines to the area of larger throttle opening may be started immediately when the supercharge driven by the electric motor is started. In this case, the speed stage shift pattern can be modified to meet with the time delay from the start of the electric motor to the increase of the engine output power by an adjustment of the shifting according to the time lapsed from the start of the supercharge by the electric motor.

However, the biasing of at least a part of the speed stage shift lines to the area of larger throttle opening may be started with a determined delay from the start of the supercharge driven by the electric motor. By such an arrangement, the speed stage shift pattern can be more easily adapted to the time delay from the start of the electric motor to the increase of the engine output power.

Conversely, the biasing of at least a part of the speed stage shift lines to the area of larger throttle opening may be returned according to the lapse of time from the stop of the supercharge driven by the electric motor to be more when a long time lapsed than when a short time lapsed. By such an arrangement, also when the supercharge driven by the electric motor is stopped, the speed stage shift pattern can be modified to meet with the time delay from the stop of the electric motor to the lowering of the engine output power so that the fuel consumption of the vehicle is improved to the maximum thereof without affecting the drive torque performance of the vehicle.

Further, the return of the biasing of at least a part of the speed stage shift lines to the area of larger throttle opening may be started after the lapse of a delay time from the stop of the supercharge driven by the electric motor. By such an arrangement, the modification of the speed stage shift pattern can be more easily adapted to the time delay from the stop of the electric motor to the lowering of the engine output power in stopping the supercharge driven by the electric motor.

In either case, the biasing of at least a part of the speed stage shift lines to the area of larger throttle opening may be made when the throttle opening increases in a range below a determined value. By such an arrangement, the biasing of at least a part of the speed stage shift lines to the area of larger throttle opening according to the input of the additional energy by the supercharge by the motor driving as to improve the fuel consumption of the vehicle to the maximum thereof without affecting the drive torque performance of the vehicle is restricted so as to be suppressed when the driver's intention for acceleration is high with the throttle opening being increased beyond a determined value, so that at such time the drive torque performance is ensured with priority over the fuel consumption.

Further, the determined value may be changed according to the biasing so as to be larger when the biasing is large than when the biasing is small. By such an arrangement, the degree of putting the priority on the drive torque performance over the fuel consumption performance is raised according to the degree of demand for acceleration by the driver.

The supercharger is a motor assist turbo supercharger adapted to be driven by an exhaust gas turbine operating on the engine exhaust gases and the electric motor, and the driving by the electric motor may be to assist the driving by the exhaust gas turbine.

### Brief Description of the Drawings

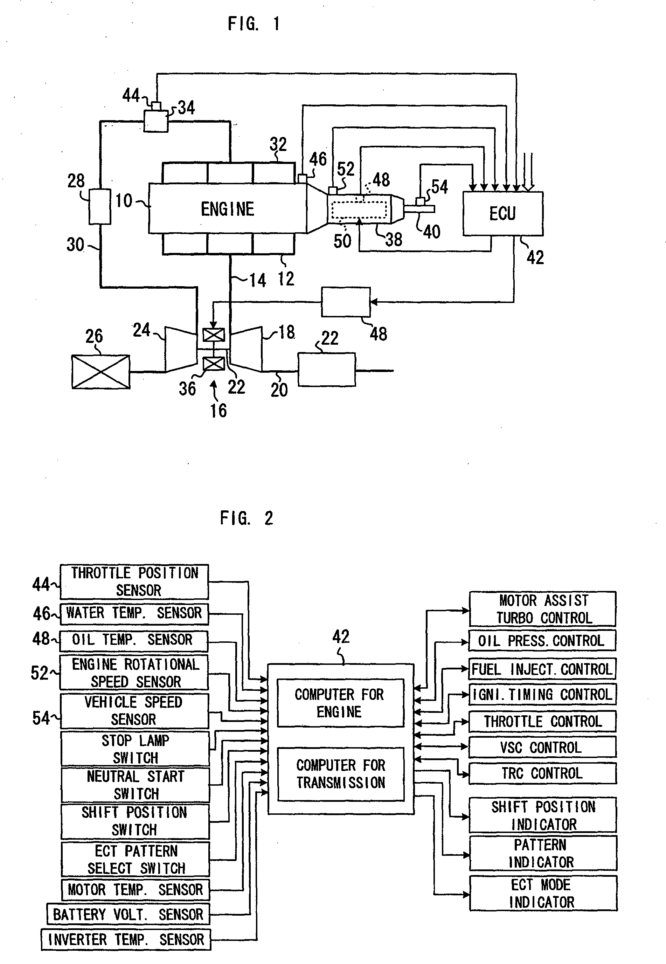

Fig. 1 is a diagrammatic illustration showing the essential portions of the drive system of the vehicle equipped with an engine accompanied by a supercharger driven by an electric motor and a transmission.
Fig. 2 is a view diagrammatically showing the manner how the electronic control device incorporating the speed stage control device according to the present intention as a software is supplied with signals indicating various information from various switches, sensors and control devices, carries out various control calculations, actuates various control devices and indicates the operating conditions of the vehicle by indicators.

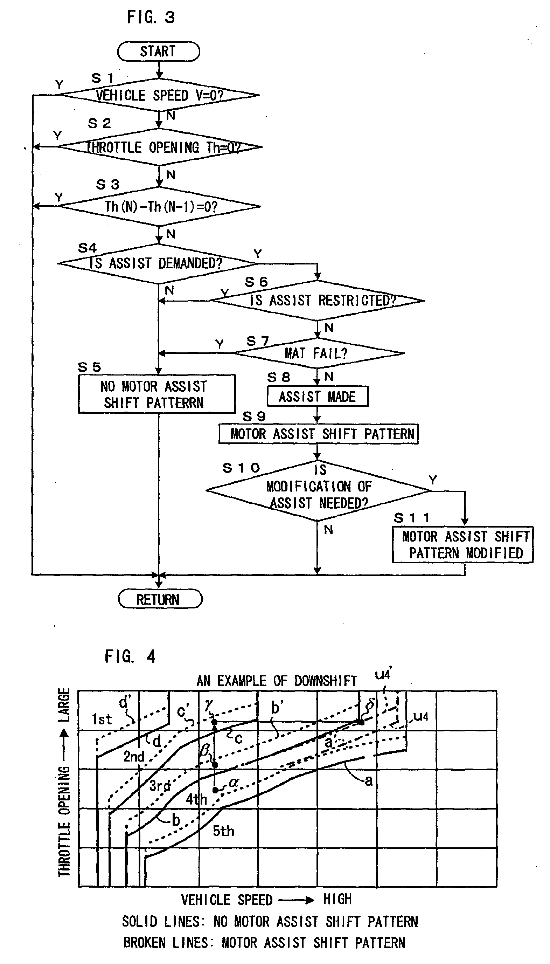

Fig. 3 is a flowchart showing the manner of operation of the speed stage control device according to the present invention in the form of a basic embodiment.
Fig. 4 is a view of the speed stage shift pattern setting up speed stage shift lines separating different speed stage areas on a two-dimensional coordinate by two variables of vehicle speed and throttle opening, shown as an example of the speed stage shift pattern for downshifting.

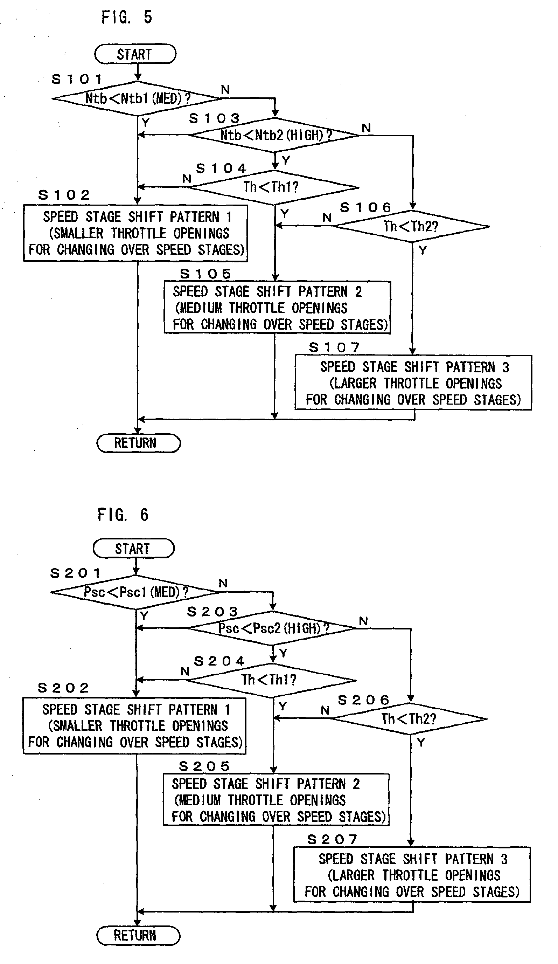

Fig. 5 is a flowchart showing an embodiment of biasing at least a part of the speed stage shift lines to the area of larger throttle opening when the motor assist supercharge is made as compared with when no motor assist supercharge is made according to the rotational speed of the supercharger so that the biasing is made more when the rotational speed is high than when the rotational speed is low.
Fig. 6 is a flowchart showing an embodiment of the control similar to that shown in Fig. 5, in which the supercharge pressure is used in place of the rotational speed of the supercharger as a parameter for judging the magnitude of supercharging.

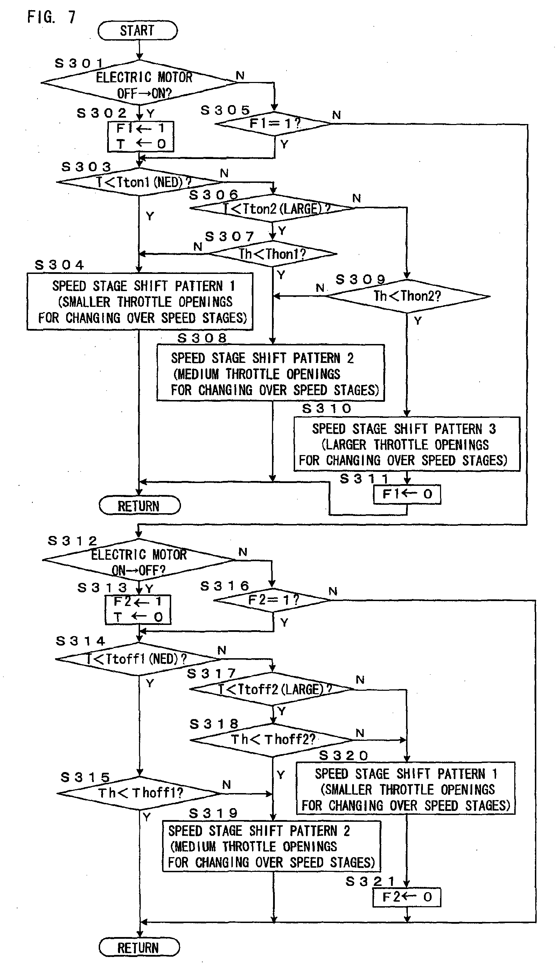

Fig. 7 is a flowchart showing an embodiment of biasing at least a part of the speed stage shift lines to the area of larger throttle opening or returning the biasing in changing over the speed stage shift pattern from the no motor assist shift pattern to the motor assist shift pattern or vice versa to be larger when the time lapse from the start of the change over is large than when the time lapse from the start of the change over is short.

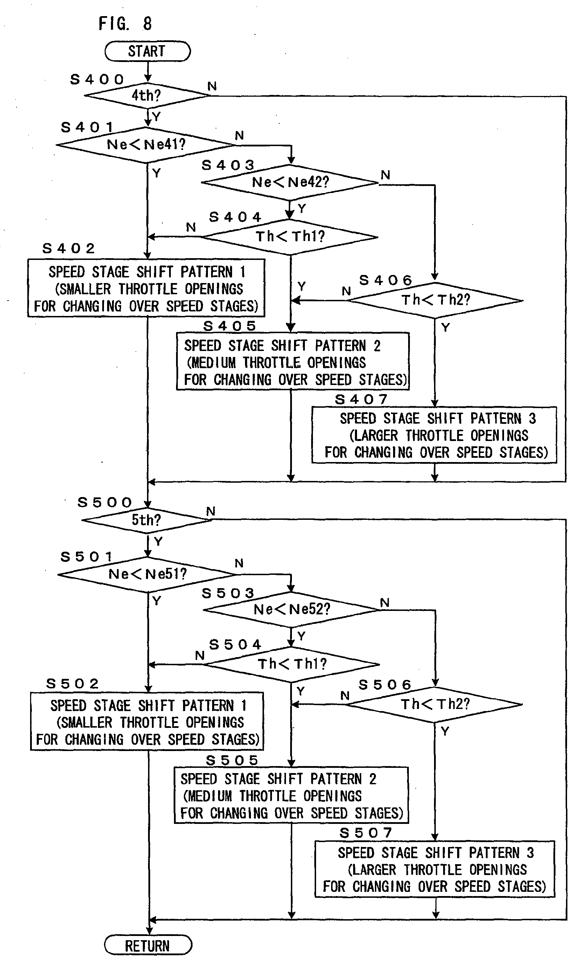

Fig. 8 is a flowchart showing an embodiment of biasing at least a part of the speed stage shift lines to the area of larger throttle opening when the motor assist supercharge is made as compared with when no motor assist supercharge is made according to the relationship between engine rotational speed and speed change gear ratio of the transmission so as to be larger when the engine rotational speed is high relative to a determined speed change gear ratio than when the engine rotational speed is low relative to the determined speed change gear ratio.

### Best Mode Embodiments of the Invention

Fig. 1 attached hereto is a diagrammatic illustration showing the essential portions of the drive system of the vehicle equipped with an engine accompanied by a supercharger driven by an electric motor and a transmission. Such a drive system is controlled by an electronic control device equipped with a microcomputer, and known in this art as long as the constructions shown in the figure are concerned, with the speed stage control device according to the present invention being incorporated in the electronic control device as a software.

In Fig. 1, 10 is an engine which is diagrammatically shown in the figure as a four cylinder engine, and the exhaust gases discharged through its exhaust manifold 12 and an exhaust conduit 14 first drive an exhaust gas turbine 18 of a supercharger 16 and are thereafter conducted through an exhaust passage 20 to a catalytic converter 22 before being exhausted to the atmosphere. The exhaust gas turbine 18 drives a compressor 24 so as to compress the air taken in through an air cleaner 26 and to supercharge the engine with the air supplied through an intake passage 30 incorporating an inter-cooler 28 and an intake manifold 32. 34 is a throttle valve. The supercharger 16 is a motor assist turbo supercharger, in which the compressor 24 can also be driven by an electric motor 36. The crankshaft not shown in the figure of the engine 10 drives an output shaft 40 by way of a transmission 38, so as to drive the wheels not shown in the figure.

The block 42 labeled as ECU is the abovementioned electronic control device equipped with a microcomputer incorporating the speed stage control device according to the present invention as a software, which is supplied with a signal indicating throttle opening from a throttle position sensor 44, a signal indicating engine cooling water temperature from a water temperature sensor 46, a signal indicating oil temperature at a pressurized oil passage portion 50 from an oil temperature sensor 48, a signal indicating engine rotational speed from an engine rotational speed sensor 52, a signal indicating vehicle speed from a vehicle speed sensor 54 and other signals indicating other various information from other various switches and sensors, carries out various control calculations, actuates various control devices, and indicates the operating conditions of the vehicle by several indicators as shown in Fig. 2. The microcomputer of the electronic control device includes, as a matter of function, a computer for engine adapted to principally engage in the control of the engine and a computer for transmission adapted to principally engage in the speed stage shift control of the transmission as shown in Fig. 2. These sensors, switches, control devices and indicators are each to engage in the overall operation control of the vehicle, in which the motor assist turbo control device for controlling the operation of the electric motor 36 of the supercharger and the oil pressure control device for changing over the speed stages of the transmission 38 are directly engaged in the operation of the speed stage control device according to the present invention.

In the following, the speed stage control device according to the present invention will be described with respect to several embodiments thereof in the manner of operation thereof.

Fig. 3 is a flowchart showing the manner of operation of the speed stage control device according to the present invention in the form of a basic embodiment. The calculation control along a flowchart of this kind is carried out in the electronic control device 42 at a cycle of several tens to several hundreds milliseconds by repetitively reading out various signals such as exemplarily shown in Fig. 2.

When the control of each cycle is started, in step 1 (S1) it is judged if the vehicle speed V is 0 or not. When the vehicle speed is 0, so that the answer is yes (Y), the control of this cycle is ended with no further steps, as the speed stage shift control according to the present invention need not be carried out. When the answer is no (N), the control proceeds to step 2.

In steps 2, it is judged if the throttle opening Th is 0 or not. The present invention is to bias at least a part of the speed stage shift lines in the speed stage shift pattern of vehicle speed vs. throttle opening toward the area of larger throttle opening when the motor assist supercharge is made than when the motor assist supercharger is not made, and since the motor assist supercharge is generally not made when the vehicle is in the normal operating condition, but is made when the engine output is temporarily increased as in an acceleration or climbing a slope, when the throttle opening is 0, the speed stage shift control according to the present invention need not be carried out. Therefore, when the answer is yes, the control in this cycle is also ended here. When the answer is no, the control proceeds to step 3.

In step 3, it is judged if the time based change rate of the throttle opening Th, i.e. the difference between the throttle opening in the current cycle Th(N) and the throttle opening in the previous cycle Th(N-1) is 0 or not. Since the motor assist supercharge is made to temporarily increase the engine output as in an acceleration or climbing a slope as described above, and is carried out in response to the driver depressing the accelerator pedal at a speed larger than a certain degree in demand for an increase of the engine output, when the time based change rate of the throttle opening is 0, the speed stage shift control according to the present invention need not be carried out. Therefore, when the answer is yes, the control in this cycle is ended here. When the answer is no, the control proceeds to step 4.

In step 4, it is judged if there is a demand for motor assist or not. Whether there is a demand for motor assist or not may be judged according to whether the accelerator pedal is depressed, i.e. the throttle opening is increased, or the accelerator pedal is being depressed at a speed larger than a certain speed, or the judgment may be made by further incorporating other conditions such as atmospheric temperature, warming up condition of the engine, etc. When the answer is no, the control proceeds to step 5, and no motor assist speed stage shift pattern not making the motor assist supercharge is selected.

When the answer of step 4 is yes, the control proceeds to step 6, and it is judged if there is a restriction for motor assist, i.e. it is judged if the motor assist should not be made for a certain reason other than the conditions for determining the motor assist. When the answer is yes, the control proceeds to step 5. When the answer is no, the control proceeds to step 7.

In step 7, it is judged if there is a failure in a motor assist turbo supercharger (MAT). When the answer is yes, the control proceeds to step 5. When the answer is no, the control proceeds to step 8, and the supercharger is operated with the motor assist, and in step 9 the speed stage shift pattern is changed over to the speed stage shift pattern for the motor assist.

As described above, the present invention is to bias at least a part of the speed stage shift lines in the speed stage shift pattern of vehicle speed vs. throttle opening toward the area of larger throttle opening when the motor assist supercharge is made than when the motor assist supercharger is not made. This is, when shown by an example of downshifting, as viewed in the speed stage shift pattern of vehicle speed vs. throttle opening setting out the speed stage shift lines on the two dimensional coordinate by two variables such as vehicle speed and throttle opening to separate different speed stage areas, to bias the 5th to 4th speed stage shift line a, 4th to 3rd speed stage shift line b, 3rd to 2nd speed stage shift line c and 2nd to 1st speed stage shift line d shown by the solid lines to the speed stage shift lines a', b', c' and d' shown by broken lines, respectively, so that at least a part thereof (totally in the shown embodiment) is shifted toward the area of larger throttle opening. Similarly, the speed stage shift lines for the upshift may be biased toward the area of larger throttle opening when the motor assist is made than when the motor assist is not made. In Fig. 4, a part of the speed stage shift lines for the upshift from 3rd to 4th speed stage is shown for no motor assist (u4) and for motor assist (u'4).

In this connection, if the speed stage shift pattern is abruptly changed from the no motor assist speed stage shift pattern to the motor assist speed stage shift pattern in step 9, such a matter as described below can happen. Assuming that the vehicle is in a stable operating condition, so that the answer of the judgment in step 4 of the flow of the abovementioned Fig. 3 is no, the no motor assist speed stage shift pattern is adopted in step 5, the point of operation by vehicle speed vs. throttle opening is at point α, and the transmission is in the 4th speed stage. Starting from this condition, it is assumed that the accelerator pedal was depressed to such an extent that the operating point of vehicle speed vs. throttle opening shifts to point B. In this case, if the speed stage shift pattern is the no motor assist speed stage shift pattern, since the operating point ß is in the 3rd speed stage area, the downshift from the 4th speed stage to the 3rd speed stage occurs, but if the speed stage shift pattern is changed over to the motor assist speed stage shift pattern, the operating point ß remains in the 4th speed stage area with no downshift being induced, while the demand for acceleration by the depression of the accelerator pedal is met by the motor assist without downshifting, whereby an appropriate acceleration feeding is obtained together with an improvement of the fuel consumption.

On the other hand, when the accelerator pedal is depressed more such that the operating point of vehicle speed vs. throttle opening shifts to point γ , the operating point shifts to the 3rd speed stage area even when the speed stage shift pattern was changed over to the motor assist speed stage shift pattern. Since a certain time is required for the supercharger being accelerated by the electric motor in the motor assist supercharge, when a demand for a larger output increase is made, the acceleration depending only on the motor assist supercharge delays. However, in changing over the speed stage shift pattern to the motor assist speed stage shift pattern in response to an acceleration demand, if the changing over is delayed, the following effect is obtained.

In more detail, it is now assumed that the vehicle is in a stable operating condition, such that the no motor assist speed stage shift pattern is adopted in step 5 of the flow of Fig. 3, the operating point of vehicle speed vs. throttle opening is at point α , and the transmission is in the 4th speed stage. Starting from this condition, it is assumed that the accelerator pedal was depressed deeply so that the operating point of vehicle speed vs. throttle opening shifts to point γ. In this case, even when the judgment in step 4 changes immediately from no to yes, if the changing over of the speed stage shift pattern from the no motor assist speed stage shift pattern like the solid lines a, b, c and d to the motor assist speed stage shift pattern like the broken lines a', b', c' and d' is delayed, then the transmission is first shifted down to the 2nd speed stage according to the no motor assist speed stage shift pattern, whereby the engine is more readily accelerated than in the 3rd speed stage. Then, when the speed stage shift pattern is changed over to the motor assist speed stage shift pattern after the acceleration of the supercharger by the motor drive has risen up, the point γ comes in the area of the 3rd speed stage even when the vehicle speed remained constant (although on the flat road the vehicle speed will rise even a little), and here the transmission is changed over from the 2nd speed stage to the 3rd speed stage. This is a special upshift by the present invention, which is not the conventional upshift that the vehicle speed traverses the upshift line from the lower speed side to the higher speed side, but it is the upshift by the downshift line being changed over from the no motor assist speed stage shift pattern to the motor assist speed stage shift pattern. By such an arrangement, the reduction gear ratio can be made smaller according to the motor assist supercharge while expediting the uprise of the engine output, so that thereby the fuel consumption of the vehicle is improved.

In this case, if the depression of the accelerator pedal continues for a while, the vehicle will be accelerated to increase the vehicle speed so far that the operating point shifts from the point γ to the point δ to traverse the 3rd to 4th upshift line a part of which is shown by a two-dot-dash line u'4 from the lower speed side to the higher speed side, whereby the transmission is changed over to the 4th speed stage.

Such a modification of the motor assist speed stage shift pattern as described above may be made by judging in step 10 of Fig. 3 whether or not to modify the speed stage shift pattern, and the control is proceeded to step 11 based upon the judgment. The judgment in step 10 and the modification of the speed stage shift pattern in step 11 may be made in various manners, and therefore, the steps 10 and 11 show generally those judgment and modification steps. In the above mentioned example, the judgment in step 10 is the amount of depression of the accelerator pedal, and the modification in step 11 is a modification of timing of changing over the speed stage shift patterns. When no modification is made as a result of the judgment in step 10, the control returns with no further processing.

The modification of the speed stage shift pattern in changing over to the motor assist speed stage shift pattern will be explained with respect to other examples by referring to Figs. 5-8. As the modification of the speed stage shift pattern in changing over to the motor assist speed stage shift pattern in step 11, when other conditions such as the temperature of the inverter, the temperature of the electric motor for supercharging, the voltage or the temperature of the battery, the temperature of the engine, the temperature of the lubricant are known or the grade of slope climbing, snow or other conditions of the road are known from the car navigator, further appropriate codifications may be made.

Fig. 5 is a flowchart showing an embodiment of making a modification of the speed stage shift pattern in changing over the speed stage shift pattern from the no motor assist speed stage shift pattern to the motor assist speed stage shift pattern according to the rotational speed of the supercharger so that the amount of biasing the speed stage shift lines is made larger when the rotational speed of the supercharger is low than when the rotational speed of the supercharger is high in starting the motor assist supercharge according to a demand for acceleration of the engine. This control may also be used as a control in the stabilized condition with the rotational speed of the supercharger stable at various values.

When the control is started, in step 101 it is judged if the rotational speed Ntb of the supercharger is lower than a determined medium value Ntb1 or not. When the answer is yes, the control proceeds to step 102, and the no motor assist speed stage shift pattern, i.e. the speed stage shift pattern 1 in which the biasing of at least a part of the speed stage shift lines toward the larger throttle opening area is the minimum 0, prepared for changing over the speed stage shift patterns at relatively small throttle openings, is adopted. Thus, when the rotational speed of the supercharger is relatively low, the speed stage shifting is made according to the no motor assist speed stage shift pattern.

When the answer of step 101 is no, the control proceeds to step 103, and it is judged if the rotational speed Ntb of the supercharger is smaller than a determined high value Nth2 or not. When the answer is yes, the controlled proceeds to step 104 and it is judged if the throttle opening Th is smaller than a determined value Th1 or not. Such a control step is provided in consideration of the matter that the fact of the control having reached step 10 of Fig. 3 indicates that the answer of step 4 became yes, indicating that the throttle opening Th has increased, and when the increase of the throttle opening Th is not small, it means that the driver's demand for the acceleration is high, and therefore, under such a condition, it is desirable that the changing over of the speed stage shift pattern to raise the throttle opening for changing over the speed stage shift pattern is not made. Therefore, when the answer of step 104 is no, the control proceeds to step 102. When the answer is yes, i.e. when the throttle opening Th is smaller than Th1, the control proceeds to step 105, where, in the shown embodiment, a speed stage shift pattern 2 in which the throttle openings for changing over the speed stages are medium, is adopted. The speed stage shift pattern 2 is a pattern like an intermediate between the no motor assist speed stage shift pattern and the motor assist speed stage shift pattern. Thus, when the rotational speed of the supercharger has increased to a medium level, the speed stage changeover is made according to a speed stage shift pattern in which the throttle openings for changing over the speed stages are set a little higher.

When the answer of step 103 is no, the control proceeds to step 106, and it is judged if the throttle opening Th is larger than a determined value Th2 or not. This judgment is made for the same purpose as step 104 in a higher rotational speed of the supercharger. When the answer is no, the control proceeds to step 105. When the answer is yes, the control proceeds to step 107, and the motor assist speed stage shift pattern, i.e. a speed stage shift pattern in which the throttle openings for changing over the speed stages are set larger is adopted. Thus, the speed stage shift patterns are changed over according to the increase of the rotational speed of the supercharger. Th1 and Th2 may be of the same value, or Th1 may be smaller than Th2. Steps 103, 104 and 105 may be omitted, so that the speed stage shift pattern is directly changed over from the no motor assist speed stage shift pattern to the motor assist speed stage shift pattern.

Fig. 6 is a flowchart showing an embodiment of carrying out the same control as in Fig. 5 by using the supercharged pressure as a parameter for judging the rising up of the supercharger in place of the rotational speed thereof. In this case, in step 201 it is judged if the supercharged pressure Psc is lower than a determined medium value Psc1 on not, while in step 203 it is judged if the supercharged pressure Psc is lower than a determined high value Psc2 or not. Since other steps 202, 204, 205, 206 and 207 correspond to steps 102, 103, 104, 105, 106 and 107 of Fig. 5, similar descriptions are omitted to avoid the redundancy of the descriptions. In this case also, steps 203, 204 and 205 may be omitted.

Fig. 7 is a flowchart showing an embodiment of carrying out the same control as in Fig. 5 or 6 according to the lapse of time from the judgment of the start of the motor assist and returning the speed stage shift pattern following to the stop of the motor assist steppedly according to the lapse of time from the judgment of the stop of the motor assist.

When the control is started, in step 301 it is judged if the electric motor of the motor assist was changed over from off to on or not. When the answer is yes, the control proceeds to step 302, and a flag F1 is set to 1, and the count time T of a timer is reset to 0. The function of the flag F1 is described later. Then the control proceeds to step 303, and it is judged if the count time T of the timer reset in step 302 is less than a determined medium time Tton1 or not. For the time being the answer is yes, and the control proceeds to step 304, where the no motor assist speed stage shift pattern, i.e., a speed stage shift pattern 1 in which the throttle openings for changing over the speed stages are set to smaller values is adopted. This speed stage shift pattern 1 may be the same as the speed stage shift pattern 1 in Fig. 5 or 6. Therefore, before a certain time lapses from the time when the electric motor for the motor assist was put on from the off state, the no motor assist speed stage shift pattern in which the throttle openings for changing over the speed stages are set to low values is adopted. This technique of delaying the shifting of at least a part of the speed stage shift lines to the area of larger throttle opening for a determined time from the start of the supercharging may also be incorporated in the flowchart of Fig. 5, 6 or the below-mentioned Fig. 8.

The answer of step 301 becomes yes only once when the electric motor was changed over from the off state to the on state, and thereafter the answer of step 301 is no. Therefore, in the following flows the control proceeds to step 305, and it is judged if the flag F1 is set to 1 or not. Since the answer is yes, thereafter the control circulates through steps 303 and 304 for the time being.

When the answer of step 303 turns from no to yes after the lapse of time, thereafter the control proceeds to step 306, where it is judged if the time T is smaller than a determined relatively large value Tton2 or not. For the time being the answer is yes, and the control proceeds to step 307, where it is judged if the throttle opening Th is smaller than a determined value Thon1 or not. The step 307 is provided for the same purpose as the step 104 of Fig. 5 or the step 204 of Fig. 6. When the answer is yes, the control proceeds to step 308, and the speed stage shift pattern 2 is adopted. The speed stage shift pattern 2 may be the same as the speed stage shift pattern 2 in Fig. 5 or 6, so that when a certain time has lapsed from the change over of the electric motor of the motor assist from off to on, the speed stage shift pattern in which the throttle openings for changing over the speed stages are set at medium values is adopted. On the other hand, when the answer of step 307 is no, i.e., when the driver is demanding a driving torque higher than a certain determined value, the control proceeds to step 304 and the no motor assist speed stage shift pattern is adopted.

When the time has lapsed so far that the answer of step 306 turns from yes to no, the control proceeds to step 309, and it is judged if the throttle opening Th is smaller than a determined second value Thon2 or not. When the answer is yes, the control proceeds to step 310, and the motor assist speed stage shift pattern, i.e., a speed stage shift pattern 3 is adopted. The speed stage shift pattern 3 may be the same as the speed stage shift pattern 3 in Fig. 5 or Fig. 6. When a certain sufficient time has lapsed after the motor of the motor assist was turned on, the motor assist speed stage shift pattern in which the throttle openings for changing over the speed stages are set at large values is adopted.

On the other hand, when the answer of step 309 is no, as the driver is demanding a driving torque larger than a determined value, the control proceeds to step 308, and the speed stage shift pattern in which the throttle openings for changing over the speed stages are set at medium values is adopted. In any event, however, after the control has proceeded to no in step 306, there will be a time that Th lowers, and then the control proceeds to step 310. When the control has once proceeded to step 310, in the next step 311 the flag F1 is reset to 0, and thereafter the answer of step 305 becomes no, and therefore the transmission control adopting the motor assist speed stage shift pattern is continued. The abovementioned determined values Thon1 and Thon2 may be the same with one another, or Thon1 may be smaller than Thon2.

Through the abovementioned steps 301-311, when the electric motor of the motor assist was turned on from the off state, such a control is made that the biasing of at least a part of the speed stage shift lines toward the area of larger throttle opening in the motor assist speed stage shift pattern as compared with the no motor assist speed stage shift pattern is made more when a longer time has lapsed from the start of the supercharge by the motor assist than when a shorter time has elapsed. Thus, when the electric motor for the supercharge is turned on and the speed stage shift pattern has been changed over from the pattern 1 up to the pattern 3, the control proceeds from step 305 to step 312 described hereinbelow, although for the time being the control returns through the no branches of steps 312 and 316 as the answers of these steps are still no, continuing the speed stage control by the speed stage shift pattern 3.

Thereafter, when the electric motor of the supercharger is stopped by the supercharge control of the engine made separately by the electronic control device 42, so that the answer of step 312 turns from no to yes, then the control proceeds to step 313, where a flag F2 is set to 1 and the count time T of the timer is reset to 0. Then in step 314 it is judged if the count time T reset in step 313 is less than a determined medium value Toff1 or not. For the time being the answer is yes, and the control proceeds to step 315, where it is judged if the throttle opening Th is smaller than a determined value Thoff1 or not. When the answer is yes, the control returns as it is, while continuing the transmission control by the speed stage shift pattern 3 adopted in step 310 in which the throttle openings for changing over the speed stages are set at relatively large values, whereas when the answer is no, the control proceeds to step 319. The value Thoff1 for the throttle opening is determined to correspond to the depression of the accelerator pedal by the driver demanding a relatively high driving torque.

Since the answer of step 312 becomes yes only once when the electric motor was turned off from the on state, and thereafter the answer of step 312 is always no. Therefore, thereafter the control proceeds to step 316, and it is judged if the flag F2 is set to 1 or not. Since the answer is yes, thereafter the control is repeated through steps 316 and 314, and for the time being through step 315.

After the lapse of a time, when the answer of step 314 changes from yes to no, thereafter the control proceeds to step 317, where it is judged if the lapsed time T is less than a determined relatively long time Ttoff2 or not. For the time being the answer is yes, and the control proceeds to step 318, where it is judged if the throttle opening Th is smaller than a determined value Thoff2 or not. When the answer is yes, the control proceeds to step 319, where a speed stage shift pattern 2 is adopted. This speed stage shift pattern 2 may be the same as the speed stage shift pattern 2 in step 308. On the other hand, when the answer of step 318 is no, i.e., when the driver is demanding a driving torque higher than a determined value, the control proceeds to step 320, and a speed stage shift pattern in which the throttle openings for changing over the speed stages are set at relatively small values, i.e., the no motor assist speed stage shift pattern, is adopted.

When the time lapses further and the answer of step 317 turns from yes to no, the control proceeds to step 320. This speed stage shift pattern 1 may be the same as the speed stage shift pattern 1 in step 304. When the control has once proceeded to step 320, in the next step 321 the flag F2 is reset to 0, so that thereafter the answer of step 316 becomes no, and the transmission control is continued with the speed stage shift pattern 1. The determined values Thoff1 and Thoff2 may be the same with one another, or Thoff1 may be smaller than Thoff2.

Through the abovementioned steps 312-321, in returning at least a part of the biasing of the speed stage shift lines when the electric motor of the motor assist was turned off from the on state, the control is made such that the returning is made more when a longer time has lapsed than when a shorter time has lapsed from the stop of the electric driving. Thus, when the electric motor of the motor assist was turned off from the on state, and when the speed stage shift pattern has been returned from the pattern 3 to the pattern 1, the control proceeds from step 301 to step 305, but since for the time being the answer of steps 301 and 305 is no, and the answer of steps 312 and 316 is also no, the control returns as it is, continuing the transmission control by the speed stage shift pattern 1 until the electric motor of the supercharger is turned on for the next operation.

The abovementioned bias returning control according to steps 312-321 may be used for returning the biasing control according to the flowchart of Fig. 5 or Fig. 6 and the biasing control according to the flowchart of the below-mentioned Fig. 8.

Fig. 8 is a flowchart similar to those of Fig. 5-Fig. 7, showing still another embodiment of modifying the speed stage shift pattern in changing over the speed stage shift pattern from the no motor assist speed stage shift pattern to the motor assist speed stage shift pattern in starting the electric motor assist supercharge in response to a demand for engine acceleration. In this case, the modification of the pattern is to bias at least a part of the speed stage shift lines toward the area of larger throttle opening more when a parameter indicating the engine output such as engine rotational speed, supercharge pressure, fuel injection rate or intake air flow is large relative to the reduction gear ratio of the transmission than when the parameter is small relative to the reduction gear ratio. In the shown flowchart, the engine rotational speed is used to represent the engine output parameter.

In this example, first in step 400 it is judged if the speed stage is set to the 4th speed stage or not. When the answer is yes, the control proceeds to step 401, and it is judged if the engine rotational speed Ne is lower than a determined relatively low value Ne41 or not. When the answer is yes, the control proceeds to step 402, where a speed stage shift pattern 1 similar to that of step 102 in Fig. 5 or step 202 in Fig. 6, which is a no motor assist speed stage shift pattern, in which the throttle openings for changing over the speed stages are relatively small, is adopted. Therefore, in this case, even when the motor assist supercharge is being made, the downshifting to the 4th speed stage or therebelow is made with no delay according to the no motor assist speed stage shift pattern. When the answer of step 401 is no, and the control proceeds to step 403, it is judged if the engine rotational speed Ne is lower than a determined value Ne42 which is higher than Ne41 or not. Since other steps 404, 405, 406 and 407 correspond to steps 104, 105, 106 and 107 in Fig. 5, similar descriptions will be omitted to avoid the redundancy of the specification. In this case also, steps 403, 404 and 405 made be omitted.

When the answer of step 400 is no (or when steps 401-407 have been finished) the control proceeds to step 500, and it is judged if the speed stage is set to the 5th speed stage or not. When the answer is yes, the control proceeds to step 501, and it is to judged if the engine rotational speed Ne is lower than a determined relatively low value Ne51 or not. The value Ne51 may be made larger than Ne41 in step 401. When the answer is yes, the control proceeds to step 502, and the speed stage shift pattern 1 which is the no motor assist speed stage shift pattern in which the throttle openings for changing over the speed stages are relatively low is adopted. When the answer of step 501 is no, the control proceeds to step 503, and it is judged if the engine rotational speed Ne is lower than Ne52 which is higher than Ne51 or not. Since other steps 504, 505, 506 and 507 correspond to steps 104, 105, 106 and 107 in Fig. 5, similar descriptions are omitted to avoid the redundancy of the specialization. In this case also, steps 503, 504 and 505 may be omitted.

Although the present invention has been described in detail with respect to several embodiments thereof, it will be apparent for those skilled in the art that various modifications are possible within the scope of the present invention.

## Claims

1. A speed stage control device for a vehicle equipped with an engine accompanied by a supercharger (16), driven by an exhaust gas turbine (18) operating on engine exhaust gases and an electric motor (36), and a transmission (38), the driving by the electric motor (36) is to assist the driving by the exhaust gas turbine (18), **characterized in that** at least a part of speed stage shift lines according to a coordinate of vehicle speed vs. throttle opening is biased more to an area of larger throttle opening when the supercharger (16) is driven by the electric motor (36) than when the supercharger is not driven by the electric motor (36).

2. A speed stage control device according to claim 1, wherein the biasing of at least a part of the speed stage shift lines to the area of larger throttle opening is changed according to rotational speed of the supercharger (16) so as to be larger when the rotational speed is high than when the rotational speed is low.

3. A speed stage control device according to claim 1, wherein the biasing of at least a part of the speed stage shift lines to the area of larger throttle opening is changed according to supercharge pressure so as to be larger when the supercharge pressure is high than when the supercharge pressure is low.

4. A speed stage control device according to claim 1, wherein the biasing of at least a part of the speed stage shift lines to the area of larger throttle opening is changed according to relationship between a parameter expressing engine output and speed change gear ratio of the transmission so as to be larger when the engine output parameter is high relative to the speed change gear ratio than when the engine output parameter is low relative to the speed change gear ratio.

5. A speed stage control device according to claim 4, wherein the engine output parameter is selected from a group consisting of engine rotational speed, supercharge pressure, fuel injection rate and air intake rate.

6. A speed stage control device according to claim 1, wherein the biasing of at least a part of the speed stage shift lines to the area of larger throttle opening is changed according to lapse of time from start of the driving of the supercharger by the electric motor so as to be larger when the time lapse is large than when the time lapse is small.

7. A speed stage control device according to any one of claims 1-6, wherein the biasing of at least a part of the speed stage shift lines to the area of larger throttle opening includes zero as the minimum value thereof.

8. A speed stage control device according to any one of claims 1-7, wherein the biasing of at least a part of the speed stage shift lines to the area of larger throttle opening is started immediately when the driving of the supercharger by the electric motor is started.

9. A speed stage control device according to any one of claims 1-7, wherein the biasing of at least a part of the speed stage shift lines to the area of larger throttle opening is started with a determined delay from time point when the driving of the supercharger by the electric motor is started.

10. A speed stage control device according to any one of claims 1-9, wherein the biasing of at least a part of the speed stage shift lines to the area of larger throttle opening is restored according to the lapse of time from the stop of the driving of the supercharger by the electric motor to be more when a long time lapsed than a short time lapsed.

11. A speed stage control device according to claim 10, wherein the restore of the biasing of at least a part of the speed stage shift lines to the area of larger throttle opening is started after the lapse of a delay time from the stop of the driving of the supercharger by the electric motor.

12. A speed stage control device according to any one of claims 1-9, wherein the biasing of at least a part of the speed stage shift lines to the area of larger throttle opening is made when the throttle opening is increasing below a determined value.

13. A speed stage control device according to claim 12, wherein the determined value is changed according to the biasing so as to be larger when the biasing is large than when the biasing is small.

## Patentansprüche

1. Gangstufensteuervorrichtung für ein Fahrzeug, das mit einer Maschine zusammen mit einem Turbolader (**16**), der durch eine mittels Maschinenabgase betätigten Abgasturbine (**18**) und einem Elektromotor (**36**) angetrieben wird, und einem Getriebe (**38**) ausgestattet ist, wobei der Antrieb durch den Elektromotor (**36**) zum Unterstützen des Antriebs durch die Abgasturbine (**18**) dient,
**dadurch gekennzeichnet, dass**
zumindest ein Teil von Schaltstufenwechsellinien gemäß einer Koordinate der Fahrzeuggeschwindigkeit über den Drosselöffnungsgrad weiter in Richtung eines Bereichs einer größeren Drosselöffnung vorgespannt wird, wenn der Turbolader (**16**) durch den Elektromotor (**36**) angetrieben wird, als wenn der Turbolader nicht durch den Elektromotor (**36**) angetrieben wird.

2. Gangstufensteuervorrichtung gemäß Anspruch 1, wobei das Vorspannen von zumindest einem Teil der Schaltstufenwechsellinien in Richtung des Bereichs der größeren Drosselöffnung gemäß einer Drehzahl des Turboladers (**16**) geändert wird, um größer zu sein, wenn die Drehzahl hoch ist, als wenn die Drehzahl niedrig ist.

3. Gangstufensteuervorrichtung gemäß Anspruch 1, wobei das Vorspannen von zumindest einem Teil der Schaltstufenwechsellinien in Richtung des Bereichs der größeren Drosselöffnung gemäß einem Ladedruck geändert wird, um größer zu sein, wenn der Ladedruck hoch ist, als wenn der Ladedruck niedrig ist.

4. Gangstufensteuervorrichtung gemäß Anspruch 1, wobei das Vorspannen von zumindest einem Teil der Schaltstufenwechsellinien in Richtung des Bereichs der größeren Drosselöffnung gemäß einer Beziehung zwischen einem Parameter, der eine Maschinenausgabe angibt, und einem Schaltstufenwechselübersetzungsverhältnis des Getriebes geändert wird, um größer zu sein, wenn der Maschinenausgabeparameter bezüglich des Schaltstufenwechselübersetzungsverhältnisses hoch ist, als wenn der Maschinenausgabeparameter bezüglich des Schaltstufenwechselübersetzungsverhältnisses niedrig ist.

5. Gangstufensteuervorrichtung gemäß Anspruch 4, wobei der Maschinenausgabeparameter aus einer Gruppe ausgewählt wird, die aus der Maschinendrehzahl, dem Ladedruck, der Kraftstoffeinspritzrate und der Luftansaugrate besteht.

6. Gangstufensteuervorrichtung gemäß Anspruch 1, wobei das Vorspannen von zumindest einem Teil der Schaltstufenwechsellinien in Richtung des Bereichs der größeren Drosselöffnung gemäß einem Verstreichen einer Zeit von dem Start des Antreibens des Turboladers durch den Elektromotor geändert wird, um größer zu sein, wenn die verstrichene Zeit lange ist, als wenn die verstrichene Zeit kurz ist.

7. Gangstufensteuervorrichtung gemäß einem der Ansprüche 1 bis 6, wobei das Vorspannen von zumindest einem Teil der Schaltstufenwechsellinien in Richtung des Bereichs der größeren Drosselöffnung Null als den Minimalwert davon umfasst.

8. Gangstufensteuervorrichtung gemäß einem der Ansprüche 1 bis 7, wobei das Vorspannen von zumindest einem Teil der Schaltstufenwechsellinien in Richtung des Bereichs der größeren Drosselöffnung unmittelbar gestartet wird, wenn das Antreiben des Turboladers durch den Elektromotor gestartet wird.

9. Gangstufensteuervorrichtung gemäß einem der Ansprüche 1 bis 7, wobei das Vorspannen von zumindest einem Teil der Schaltstufenwechsellinien in Richtung des Bereichs der größeren Drosselöffnung mit einer vorbestimmten Verzögerung von dem Zeitpunkt gestartet wird, wenn das Antreiben des Turboladers durch den Elektromotor gestartet wird.

10. Gangstufensteuervorrichtung gemäß einem der Ansprüche 1 bis 9, wobei das Vorspannen von zumindest einem Teil der Schaltstufenwechsellinien in Richtung des Bereichs der größeren Drosselöffnung gemäß einem Verstreichen einer Zeit von dem Stoppen des Antreibens des Turboladers durch den Elektromotor wiederaufgenommen wird, um mehr zu sein, wenn eine längere Zeit verstrichen ist, als wenn eine kurze Zeit verstrichen ist.

11. Gangstufensteuervorrichtung gemäß Anspruch 10, wobei das Wiederaufnehmen des Vorspannens von zumindest einem Teil der Schaltstufenwechsellinien in Richtung des Bereichs der größeren Drosselöffnung nach dem Verstreichen einer Verzögerungszeit von dem Stoppen des Antreibens des Turboladers durch den Elektromotor gestartet wird.

12. Gangstufensteuervorrichtung gemäß einem der Ansprüche 1 bis 9, wobei das Vorspannen von zumindest einem Teil der Schaltstufenwechsellinien in Richtung des Bereichs der größeren Drosselöffnung durchgeführt wird, wenn die Drosselöffnung über einen bestimmten Wert ansteigt.

13. Gangstufensteuervorrichtung gemäß Anspruch 12, wobei der bestimmte Wert gemäß dem Vorspannen geändert wird, um größer zu sein, wenn das Vorspannen groß ist, als wenn das Vorspannen klein ist.

## Revendications

1. Dispositif de commande d'étage de vitesse pour un véhicule équipé d'un moteur accompagné d'un compresseur (16), entraîné par une turbine à gaz d'échappement (18) fonctionnant sur les gaz d'échappement de moteur et par un moteur électrique (36), et d'une transmission (38), l'entraînement par le moteur électrique (36) servant à assister l'entraînement par la turbine à gaz d'échappement (18), **caractérisé en ce qu'**au moins une partie des courbes de changement d'étage de vitesse suivant la coordonnée de vitesse de véhicule en fonction de l'ouverture de papillon des gaz est décalée davantage vers une zone de plus grande ouverture de papillon des gaz lorsque le compresseur (16) est entraîné par le moteur électrique (36) que lorsque le compresseur n'est pas entraîné par le moteur électrique (36).

2. Dispositif de commande d'étage de vitesse selon la revendication 1, dans lequel le décalage d'au moins une partie des courbes de changement d'étage de vitesse vers la zone de plus grande ouverture de papillon des gaz est modifié en fonction de la vitesse de rotation du compresseur (16) de façon à être plus grand lorsque la vitesse de rotation est élevée que lorsque la vitesse de rotation est basse.

3. Dispositif de commande d'étage de vitesse selon la revendication 1, dans lequel le décalage d'au moins une partie des courbes de changement d'étage de vitesse vers la zone de plus grande ouverture de papillon des gaz est modifié en fonction de la pression de suralimentation de façon à être plus grand lorsque la pression de suralimentation est élevée que lorsque la vitesse de rotation est basse.

4. Dispositif de commande d'étage de vitesse selon la revendication 1, dans lequel le décalage d'au moins une partie des courbes de changement d'étage de vitesse vers la zone de plus grande ouverture de papillon des gaz est modifié en fonction d'une relation entre un paramètre exprimant la sortie de moteur et un rapport d'engrenages de changement de vitesse de la transmission de façon à être plus grand lorsque le paramètre de sortie de moteur est grand relativement au rapport d'engrenages de changement de vitesse que lorsque le paramètre de sortie de moteur est petit relativement au rapport d'engrenages de changement de vitesse.

5. Dispositif de commande d'étage de vitesse selon la revendication 4, dans lequel le paramètre de sortie de moteur est choisi à partir d'un groupe constitué de la vitesse de rotation de moteur, de la pression de suralimentation, du débit d'injection de carburant et du débit d'admission d'air.

6. Dispositif de commande d'étage de vitesse selon la revendication 1, dans lequel le décalage d'au moins une partie des courbes de changement d'étage de vitesse vers la zone de plus grande ouverture de papillon des gaz est modifié en fonction du temps écoulé depuis le début de l'entraînement du compresseur par le moteur électrique de façon à être plus grand lorsque le temps écoulé est grand que lorsque le temps écoulé est petit.

7. Dispositif de commande d'étage de vitesse selon l'une quelconque des revendications 1 à 6, dans lequel le décalage d'au moins une partie des courbes de changement d'étage de vitesse vers la zone de plus grande ouverture de papillon des gaz inclut zéro comme valeur minimale.

8. Dispositif de commande d'étage de vitesse selon l'une quelconque des revendications 1 à 7, dans lequel le décalage d'au moins une partie des courbes de changement d'étage de vitesse vers la zone de plus grande ouverture de papillon des gaz démarre immédiatement lorsque l'entraînement du compresseur par le moteur électrique démarre.

9. Dispositif de commande d'étage de vitesse selon l'une quelconque des revendications 1 à 7, dans lequel le décalage d'au moins une partie des courbes de changement d'étage de vitesse vers la zone de plus grande ouverture de papillon des gaz démarre avec un retard prédéterminé par rapport au moment où l'entraînement du compresseur par le moteur électrique démarre.

10. Dispositif de commande d'étage de vitesse selon l'une quelconque des revendications 1 à 9, dans lequel le décalage d'au moins une partie des courbes de changement d'étage de vitesse vers la zone de plus grande ouverture de papillon des gaz est rétabli en fonction du temps écoulé depuis l'arrêt de l'entraînement du compresseur par le moteur électrique de façon à être davantage lorsqu'un temps long s'est écoulé que lorsqu'un temps court s'est écoulé.

11. Dispositif de commande d'étage de vitesse selon la revendication 10, dans lequel le rétablissement du décalage d'au moins une partie des courbes de changement d'étage de vitesse vers la zone de plus grande ouverture de papillon des gaz est démarré après l'écoulement d'un temps de retard par rapport à l'arrêt de l'entraînement du compresseur par le moteur électrique.

12. Dispositif de commande d'étage de vitesse selon l'une quelconque des revendications 1 à 9, dans lequel le décalage d'au moins une partie des courbes de changement d'étage de vitesse vers la zone de plus grande ouverture de papillon des gaz se fait lorsque l'ouverture de papillon des gaz est croissante au-dessous d'une valeur déterminée.

13. Dispositif de commande d'étage de vitesse selon la revendication 12, dans lequel la valeur déterminée est modifiée en fonction du décalage de façon à être plus grande lorsque le décalage est grand que lorsque le décalage est petit.
